(19) Europäisches Patentamt

European Patent Office

Office européen des brevets

(11) **EP 1 185 432 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(21) Anmeldenummer: 01913630.8

(22) Anmeldetag: **14.02.2001**

(51) Int Cl.⁷: **B60K 31/18**, B60K 31/10

(86) Internationale Anmeldenummer:
**PCT/DE2001/000552**

(87) Internationale Veröffentlichungsnummer:
**WO 2001/072545 (04.10.2001 Gazette 2001/40)**

(54) **VERFAHREN UND VORRICHTUNG ZUR AUSLÖSUNG EINER UBERNAHMEAUFFORDERUNG FÜR FAHRGESCHWINDIGKEITSGEREGELTE FAHRZEUGE**

METHOD AND DEVICE FOR RELEASING A TAKE-OVER REQUEST FOR CRUISE CONTROLLED VEHICLES

PROCEDE ET DISPOSITIF POUR DECLENCHER UNE DEMANDE DE PRISE EN CHARGE POUR DES VEHICULES A VITESSE REGULEE

(84) Benannte Vertragsstaaten:
**DE FR GB**

(30) Priorität: **28.03.2000 DE 10015299**

(43) Veröffentlichungstag der Anmeldung:
**13.03.2002 Patentblatt 2002/11**

(73) Patentinhaber: **ROBERT BOSCH GMBH**
**70442 Stuttgart (DE)**

(72) Erfinder:
• **HELLMANN, Manfred**
**71706 Hardthof (DE)**

• **WINNER, Hermann**
**76229 Karlsruhe (DE)**
• **IRION, Albrecht**
**70563 Stuttgart (DE)**

(56) Entgegenhaltungen:
**WO-A-99/58359        DE-A- 19 544 923**

• **WINNER ET AL: "Adaptive Cruise Control System Aspects and Development Trends" SAE TRANSACTIONS,SOCIETY OF AUTOMOTIVE ENGINEERS, INC., WARRENDALE, PA,US, Bd. 105, Nr. 961010, 1996, Seiten 1412-1421, XP002124577 ISSN: 0096-736X in der Anmeldung erwähnt**

EP 1 185 432 B1

**Beschreibung**

Stand der Technik

Die vorliegende Erfindung geht aus von einem Verfahren sowie einer Vorrichtung nach den Oberbegriffen der beiden unabhängigen Ansprüche zum Auslösen einer Übernahmeaufforderung für Fahrzeuge mit adaptivem Fahrgeschwindigkeitsregler.
Verfahren und Vorrichtungen zur Regelung der Geschwindigkeit und/oder Beschleunigung sind seit längerem unter der Bezeichnung "Tempomat" bekannt. Ebenfalls bekannt ist es, eine solche Vorrichtung durch einen Sensor zu ergänzen, der vorausfahrende Fahrzeuge und gegebenenfalls in Fahrtrichtung befindliche Hindernisse erkennen kann. Dadurch kann die Vorrichtung nicht nur eigene, d.h. fahrzeuginterne, sondern auch umgebende Verkehrsgrößen in die Regelung der Fahrzeuggeschwindigkeit einbeziehen. Solche Vorrichtungen werden als adaptive oder dynamische Fahrgeschwindigkeitsregler, im Englischen als Adaptive Cruise Control (ACC) bezeichnet.
Ein derartiges, adaptives Fahrregelungssystem soll dem Fahrer als ein komfortables Assistenzsystem dienen, weshalb die Beschleunigungs- und Verzögerungsdynamik, mit der das Regelsystem den Antrieb und die Bremsen des Fahrzeugs ansteuert, beschränkt ist. Des Weiteren soll und kann ein adaptiver Fahrgeschwindigkeitsregler dem Fahrer keine Verantwortung abnehmen, sondern diesen lediglich von monotonen und ermüdenden Tätigkeiten entlasten.
Die bestehenden ACC-Systeme sind daher bewußt nicht in der Lage, selbstständig eine scharfe Bremsung oder gar eine Vollbremsung einzuleiten, obwohl die Systemsensorik Gefahrensituationen erkennen kann.
Bei Gefahrensituationen sehen alle bestehenden ACC-Systeme eine sogenannte Übernahmeaufforderung (ÜNA) vor, die aktiviert wird, wenn die vom automatischen System vorgesehene Maximalverzögerung nicht mehr ausreicht um eine Kollision zu vermeiden. Die Übernahmeaufforderung signalisiert dem Fahrer akustisch, optisch, haptisch oder kinästhetisch, daß ein manueller Eingriff mittels des Bremspedals nötig wird, da das System in der gegebenen Auslegung die Situation demnächst nicht mehr beherrschen kann.
Ergänzend besitzt der Fahrer jederzeit Priorität gegenüber dem Fahrregelsystem, indem er durch Betätigen des Gas- oder des Bremspedals das System übersteuern oder deaktivieren kann und damit die automatische Fahrregelung außer Kraft setzen kann.
Eine grundsätzliche Beschreibung einer solchen Vorrichtung ist beispielsweise in dem Aufsatz "Adaptive Cruise Controls - System Aspects and Development Trends" von Winner, Witte et al., veröffentlicht auf der SAE 96 vom 26. bis 29. Februar 1996 in Detroit (SAE-Paper No. 961010), enthalten. Hier wurde die Dynamikbeschränkung des Systems zum Zwecke des Fahrkomforts ausführlich beschrieben.
Die Übernahmeaufforderung wurde in diesem Artikel als möglicherweise akustisches Signal erwähnt, das dann aktiviert wird, wenn keine ausreichende Verzögerung bereitgestellt werden kann um auf die momentane Situation passend zu reagieren.
Aus der DE 195 44 923 A1 ist eine Vorrichtung und ein Verfahren zur Fahrtregelung gemäß dem Oberbegriffen der unabhängigen Ansprüche 1 und 7 bekannt. Dieses System verfügt u.a. über ein Radarsystem und einen Fahrzeuggeschwindigkeitssensor, aus deren Meßwerten ein Beschleunigungsbedarfssignal gebildet wird, das zur Ansteuerung der Drosselklappe und der Bremsen benutzt wird (EGAS-System). Ein Begrenzer sorgt dafür, daß das Beschleunigungsbedarfssignal den Bereich zwischen einem vorgegebenen Maximal- bzw. Minimalwert nicht verläßt, um einen vorgesehenen Fahrkomfort der Fahrzeuginsassen zu gewährleisten. Der Fahrer wird bei diesem System über eine Blinkleuchte, einen Tongenerator, eine Haptik oder eine Kombination dieser Möglichkeiten benachrichtigt.
Diese Signalisierelemente werden aktiviert, wenn der derzeitige Verzögerungsbedarf des Fahrzeugs die für das Fahrzeug maximal erlaubte Verzögerung überschreitet oder annähernd erreicht und das Fahrzeug gleichzeitig der Fahrtregelung unterliegt.
In der EP 0 348 691 B1 werden Konzepte zur haptischen Signalisierung aufgezeigt, jedoch kein Verfahren beschrieben, das Bezug auf eine Auslösung einer Übernahmeaufforderung aufzeigt.

Aufgabe, Lösung und Vorteile der Erfindung

Aufgabe der vorliegenden Erfindung ist es dementsprechend, Kriterien zu entwickeln, anhand der die Aktivierung einer Übernahmeaufforderung ausgelöst werden kann, so daß die Häufigkeit der Fehlalarmierungen auf ein mögliches Minimum reduziert wird.
Diese Aufgabe wird mit den Merkmalen der Hauptansprüche gelöst.
Dies geschieht erfindungsgemäß dadurch, daß zur Aktivierung der Übernahmeaufforderung mindestens zwei Kriterien bezüglich Verzögerungswerten gleichzeitig erfüllt sein müssen. Im späteren Ausführungsbeispiel sind dies zwei Ungleichungen, bezüglich der Verzögerungswerte aSoll und aWarn, die gleichzeitig erfüllt sein müssen. Dabei sollen die zwei verzögerungsbezüglichen Größen so geartet sein, daß dies zu einer möglichst vollständigen Reduzierung der Fehlwarnungen führt. Weiterhin sind Entscheidungsschwellen "aMaxVerzög + Offset1" 221 sowie "aMaxVerzög + Offset2" 231 dieser Kriterien nicht mehr wie bisher durch konstante Schwellwerte gegeben, sondern werden dynamisch, in Abhängigkeit von Momentanwerten wie beispielsweise der Fahrzeuggeschwindigkeit, verändert.

Entsprechend zur Situation bei bekannten Systemen wird zur Ansteuerung der Aktuatoren, für die Drosselklappeneinstellung und die Bremsenbetätigung nur die Größe des Beschleunigungsbedarfs, im vorliegenden Fall mit aWarn bezeichnet, verwendet. Unterschreitet diese Größe aWarn den negativen Beschleunigungswert, der der Bremseinschalthysterese entspricht, so wird das Fahrzeug abgebremst, wobei die Bremskraft von dem betragsmäßigen Wert von aWarn abhängt.

Treten nun kurzfristige Fehlmessungen auf, so löst das System eventuell eine Übernahmeaufforderung aus, obwohl die Situation es nicht erfordern würde. Auf diese Weise entstehen Fehlwarnungen, die den Fahrer irritieren können und das System unausgereift erscheinen lassen.

Zur Lösung dieses Problems wird eine zweite Beschleunigungsgröße eingeführt, die im Weiteren mit aSoll gekennzeichnet ist. Diese Größe aSoll muß, ebenfalls wie aWarn, eine bestimmte negative Beschleunigungsschwelle, im Ausführungsbeispiel mit "aMaxVerzög + Offset2" 231 gekennzeichnet, unterschreiten, so daß beide Kriterien die Übernahmeaufforderung gemeinsam auslösen. aSoll ist dabei die Größe, die an die Bremsenansteuerung weitergeleitet wird bzw. im Antriebsfall an die Motorsteuerung weitergeleitet wird und dort in ein Motorsollmoment umgerechnet wird. Um den Fahrzeuginsassen Komfort zu vermitteln, wird die Größe aSoll, die direkt auf Antriebsstrang- und Verzögerungselemente wirkt, in mehrerlei Weise begrenzt. So wird der maximal zulässige Beschleunigungswert sowohl durch einen positiven wie auch durch einen negativen Begrenzungswert beschränkt, um ein komfortables Fahrgefühl zu vermitteln. Weiterhin wird die zeitliche Änderung des Beschleunigungswertes im Begrenzer 103 begrenzt um damit den sogenannten "Ruck" bei einem Lastwechsel zu verhindern.

Die beiden Schaltschwellenwerte "aMaxVerzög + Offset1" 221 und "aMaxVerzög + Offset2" 231 für die Eingangsgrößen awarn und aSoll, bei deren Unterschreiten die Übernahmeaufforderung 109 ausgelöst wird, sind erfindungsgemäß während des Betriebs veränderbar, so daß die Schaltschwellenwerte auf die momentane Fahrsituation eingestellt werden können. Dabei wird der Wert aMaxVerzög in Abhängigkeit von der momentanen Fahrgeschwindigkeit gebildet, wodurch man bei unterschiedlichen Geschwindigkeiten auch den Startpunkt der Verzögerung unterschiedlich wählen kann.

Diese Neuerungen vermeiden Fehlwarnungen der ACC-Übernahmeaufforderung. Erkennt das System nur für eine kurze Zeitdauer ein Objekt im Kursbereich des Fahrzeugs, beispielsweise durch Nebenspurstörungen oder Fehlmessungen, so wird durch die erfinderischen Maßnahmen nicht mehr sofort eine Übernahmeaufforderung ausgelöst, sondern es wird eine Bremsung begonnen. Verschwindet dieses Objekt wieder, bevor die momentane Verzögerung aSoll in etwa der dem System zur Verfügung stehenden Maximalverzögerung "aMaxVerzög + Offset2" 231 entspricht, so wird die Bremsung wieder rucklos aufgehoben und das Fahrzeug fährt im Normalbetrieb weiter. Verschwindet das detektierte Objekt jedoch nicht und die momentane Verzögerung nähert sich der dem System zur Verfügung stehenden Maximalverzögerung "aMaxVerzög + Offset2" oder erreicht diese, so wird, wenn das System noch immer vorhersagt, daß es nicht mehr rechtzeitig und in ausreichendem Maße das Fahrzeug abbremsen kann, die Übernahmeaufforderung 109 ausgelöst.

Die Erfahrung hat zudem gezeigt, daß das Bremsverhalten bei hohen und bei niederen Geschwindigkeiten in der Regel sehr unterschiedlich ausfällt. Daher wurde erfindungsgemäß auch das automatische Bremsverhalten des ACC-Systems von der Momentangeschwindigkeit abhängig gemacht, um damit ein Bremsverhalten zu erzeugen, das dem eines verantwortungsvollen Fahrers entspricht.

Des Weiteren ergibt sich daraus, auch im Hinblick auf die Zeitgradientenbegrenzung der Größe aSoll, der Eindruck des komfortableren und angenehmeren Fahrens.

Zeichnung und Beschreibung des Ausführungsbeispiels

Nachfolgend wird ein Ausführungsbeispiel der Erfindung sowie ein mögliches Ablaufszenario, wie es sich während dem ACC-Betrieb ergeben kann, anhand zweier Zeichnungen erläutert.

Fig.1 zeigt ein Blockschaltbild eines erfindungsgemäßen Ausführungsbeispiels.

In Fig.2 ist ein mögliches Ablaufszenario dargestellt, wie es sich beim Betrieb eines Fahrzeugs mit ACC ergeben kann, bestehend aus 4 Teildiagrammen, in denen jeweils eine Größe des ACC-Systems gegen die Zeit aufgetragen ist.

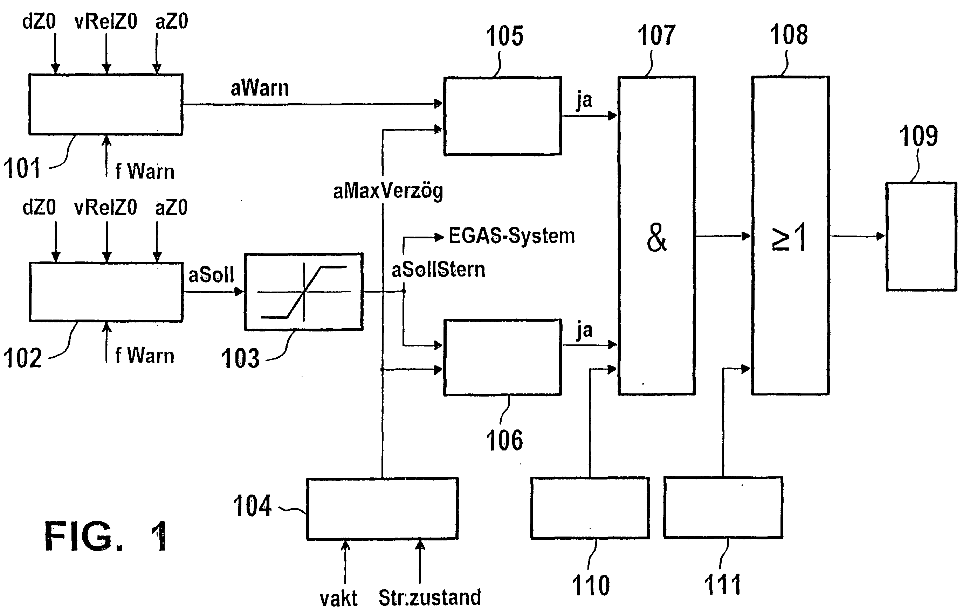

Fig.1 zeigt in einem Blockdiagramm ausschnittsweise ein ACC-System. Im Einzelnen ist dargestellt, wie aus den Eingangsgrößen die Entscheidung zur Auslösung der Übernahmeaufforderung gebildet wird.

Die Entfernung dZO zwischen dem eigenen und dem vorausfahrenden Fahrzeug, die Relativgeschwindigkeit des Zielobjekts vRelZO bezogen auf das vorausfahrende Fahrzeug sowie die Beschleunigung des Zielobjekts aZO gehen als Eingangsgrößen in den Funktionsblock 101 ein, in dem der Wert aWarn gebildet wird. Diese Bildung des Wertes aWarn kann durch Berechnung mittels einer mathematischen Formel oder durch Hinterlegen eines Kennfeldes oder Tabellenwerkes im Block 101 erfolgen. Für den Fall der Berechnung mittels einer mathematischen Formel berechnet sich

aWarn vorteilhafterweise zu

$$aWarn = ((sign(vRelZO)(vRelZO)^2)/(2dWarn))+aZO \qquad (1)$$

wobei sich der Warnabstand dWarn (Relativverzögerungsweg) wiederum aus

$$dWarn = (fWarn \, dZO)- Offset3 \qquad (2)$$

berechnet.

fWarn ist hierbei ein Faktor, der entweder als Parameter fest vorgegeben oder aber variabel berechnet werden kann; im letzteren Fall vorzugsweise eine Funktion der eingestellten Zeitlücke sein kann. Mit diesem Faktor fWarn kann beispielsweise die vom Fahrer eingestellte Zeitlücke oder ein vom Fahrer vorgegebenes Fahrprogramm (komfortabel, sicher, sparsam, sportlich,...) berücksichtigt werden.

Die so berechnete Größe aWarn wird daraufhin an den Funktionsblock 105 weitergegeben.

Im Funktionsblock 102 wird in ähnlicher Weise wie in Block 101, mittels der Eingangsgrößen Abstand dZO, der Relativgeschwindigkeit des Zielobjektes vRelZO sowie der Beschleunigung des Zielobjektes aZO die Größe aSoll gebildet. Dies geschieht wieder, wie in Block 101 durch eine mathematische Formel oder durch hinterlegte Kennfelder oder Tabellenwerke. Der so gebildete Wert aSoll wird einem Begrenzer zugeführt, der diese Größe bezüglich der Minimal- bzw. Maximalwerte als auch bezüglich der zeitlichen Beschleunigungsveränderung begrenzt und als Größe aSollStern dem Entscheiderblock 106 zugeführt wird. Gleichzeitig wird diese Größe aSollStern der Drosselklappensteuerung und der Bremsenansteuerung weitergegeben, die in Fig.1 mit "EGAS-System" bezeichnet sind, wo sie auf die Antriebs- und Bremssysteme umgesetzt werden.

Im Funktionsblock 104 wird die maximal vom ACC-System steuerbare Verzögerung aMaxVerzög gebildet und den Entscheiderblöcken 105 und 106 zugeführt. Die maximal vom adaptiven Fahrgeschwindigkeitsregelsystem steuerbare Verzögerung "aMaxVerzög + Offset2" wird hierbei in Abhängigkeit von der momentanen Fahrgeschwindigkeit verändert, so daß das System jederzeit über einen maximal großen aber dennoch komfortablen Dynamikbereich verfügt.

Im Block 105 wird eine Ungleichung überwacht. Hier wird geprüft, ob die Bedingung

$$aWarn < aMaxVerzög + Offset1 \qquad (3)$$

erfüllt ist. Ist dies der Fall, so wird an das nachfolgend geschaltete UND-Glied 107 in geeigneter Art und Weise signalisiert, daß die im Block 105 zu überprüfende Bedingung erfüllt ist. Ebenso prüft der Entscheidungsblock 106 ob die Bedingung

$$aSollStern < aMaxVerzög + Offset2 \qquad (4)$$

erfüllt ist, deren Variablen aus den Eingangsgrößen aSollStern und aMaxVerzög bestehen. Im Falle daß die Ungleichung (4) erfüllt ist, signalisiert der Entscheidungsblock 106 ebenso in geeigneter Art und Weise an das UND-Glied 107, daß eine Auslösebedingung erfüllt ist.

Die Offsetwerte Offset1 und Offset2 sind Parameter, durch die sich die Warnschwellen laut Gl.(3) und Gl.(4) noch variieren und optimieren lassen.

Das UND-Glied 107 überwacht, ob sämtliche Eingänge gleichzeitig melden, daß die Bedingungen der vorgeschalteten Entscheidungsblöcke 105 und 106 erfüllt sind.

Ist dies der Fall, so signalisiert das UND-Glied 107 dem ODER-Glied 108, daß die Bedingungen zur Auslösung der Übernahmeaufforderungen erfüllt sind. Das ODER-Glied 108 signalisiert der Übernahmeaufforderung 109, daß diese ausgelöst werden soll und dem Fahrer dadurch mitgeteilt wird, daß die komfortable Systembremsung nicht ausreicht um eine genügende Verzögerung zu erhalten.

Mittels der Funktionsblöcke 110, der mit einem der Eingänge des UND-Gliedes 107 verbunden ist, sowie 111, der mit einem Eingang des ODER-Gliedes 108 verbunden ist, können zusätzliche Kriterien hinsichtlich der Aktivierung der Übernahmeaufforderung berücksichtigt werden.

So ist der Funktionsblock 110 ausgangsseitig mit einem Eingang des UND-Gliedes 107 verbunden. Diese Funktion 110 kann zweckmäßigerweise eine Überwachung des aktiven Betriebszustandes sein. In diesem Fall würde der Block 110 den Betriebszustand der ACC-Regelung überwachen und dieses an den Block 107 in geeigneter Art und Weise melden. Desweiteren wäre es zweckmäßig als UND-Bedingung eine Geschwindigkeitsabhängigkeit einzubringen, die eine Aktivierung der Übernahmeaufforderung nur dann zuläßt, wenn das Fahrzeug bestimmte Geschwindigkeitsanforderungen erfüllt. Dies hat zur Folge, daß das Übernahmesignal tatsächlich nur dann aktiviert wird, wenn das ACC-Steuer-und-Regelgerät aktiv das Gas und die Bremse ansteuern kann

Ebenso kann man vorteilhafterweise mittels einer Selbstdiagnosefunktion feststellen, ob das ACC-Steuer-und-Regelgerät einwandfrei funktioniert. Im Falle, daß dieses Gerät nicht fehlerfrei arbeitet, wird im Funktionsblock 111 ein Ausgangssignal generiert, das das ODER-Glied 108 empfängt und letztendlich eine Aktivierung der Übernahmeaufforderung veranlaßt. Damit ist gewährleistet, daß der Fahrer im Fehlbetriebsfall zur Übernahme aufgefordert wird und sich das ACC-Steuer-und-Regelgerät im Anschluß an die Betätigung des Bremspedals gefahrlos selbst abschalten kann. Weiterhin ist es vorteilhaft zu überprüfen, ob die Sensorfunktion sichergestellt ist. So ist es zweckmäßig ein Blindheitserkennungssignal oder ein Regenerkennungssignal zu verarbeiten oder ein Signal zu verarbeiten, das bei eingeschränkten Sichtverhältnissen wie beispielsweise Nebel eine Warnung vor stehenden Objekten in der eigenen Spur veranlaßt.

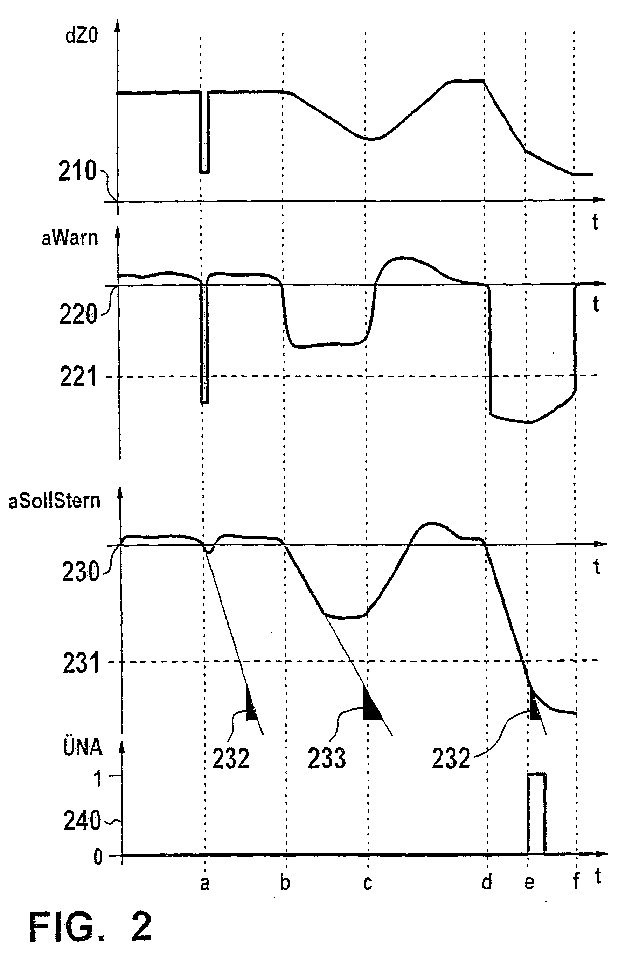

In Fig.2 ist ein Szenario eines ACC-betriebenen Fahrzeugs dargestellt, wie es sich jederzeit in der Realität ereignen kann. Diese Darstellung besteht aus 4 untereinander gezeichneten Diagrammen, in denen jeweils eine charakteristische Größe gegen die Zeit aufgetragen wurde. Im Diagramm 210 ist der Abstand zum Zielobjekt dZO gegen die Zeit aufgetragen. Im Diagramm 220 wurde die Warnbeschleunigung aWarn ebenfalls gegen die Zeit aufgetragen. Die eingezeichnete Grenze 221 bezeichnet hier den Schwellwert "aMaxVerzög + Offset1", bei dessen Überschreitung eine entsprechende Signalisierung an das UND-Glied 107 aus Fig.1 weitergegeben wird.

Im Diagramm 230 wurde die begrenzte Sollbeschleunigung aSollStern gegen die Zeit aufgetragen. Dies ist die Größe, die auch eine Steuerung für die elektronisch gesteuerte Drosselklappe (EGAS) oder eine elektronisch angesteuerte Bremse zugeführt bekommt. Der eingezeichnete Wert 231 stellt auch hier wieder den Schwellwert "aMaxVerzög+Offset2" dar, bei dessen Unterschreiten auch eine entsprechende Signalisierung an das UND-Glied 107 weitergegeben wird.

Im untersten Diagramm 240 wurde die Übernahmeaufforderung als digitales Signal dargestellt. Hier bedeutet die Flanke von "0" nach "1" eine Aktivierung des Übernahmeaufforderungssignals. Die Impulsdauer des ÜNA(t)-Signals hängt von der Dauer des Übernahmesignals ab. Ist die Signalisierung beendet, dann springt die ÜNA(t)-Kurve wieder von "1" auf "0" zurück.

Die 4 Diagramme 210, 220, 230 und 240 sind derart angeordnet, daß die Zeitstrahlen parallel verlaufen. Dadurch kann man Stellen gleichen Zeitpunktes durch vertikale Linien darstellen, die in Fig.2 gestrichelt eingetragen wurden. Besondere Zeitpunkte wurden durch die lateinischen Buchstaben a bis f am unteren Rand von Fig.2 beschriftet.

Zum Zeitpunkt t=0 im dZO-t-Diagramm 210 herrscht ein gewisser Abstand dZO(t=0) zwischen dem ACC-gesteuerten Fahrzeug und dem vorausfahrenden Fahrzeug, der konstant gehalten wird.

Zum Zeitpunkt t=a taucht plötzlich ein zusätzliches Reflexionsobjekt auf, das sich in sehr kurzem Abstand zum ACC-gesteuerten Fahrzeug befindet, nur für sehr kurze Zeit detektiert wird und wieder genauso plötzlich verschwindet.

Das System versucht in diesem Fall eine starke Verzögerung bereitzustellen, die weit unter der Warnschwelle 221 des aWarn-t-Diag-rammes 220 liegt. Dadurch gibt in Fig.1 der Block 105 an das UND-Glied 107 ein entsprechendes Signal weiter. Das Signal aSollStern, das auch die Antriebs- und Bremselemente steuert, entsteht im Wesentlichen auf ähnliche Weise wie aWarn, nur mit dem Unterschied, daß aSollStern sowohl maximalwertbegrenzt wie auch gradientenbegrenzt ist. Sprünge, steile Flanken sowie betragsmäßig große Werte sind damit für aSollStern ausgeschlossen. Bis die gewünschten Endwerte für aSollStern eingeregelt sind verstreicht eine gewisse Zeitdauer, weshalb dieses Signal als träge oder verzögernd gegenüber aWarn bezeichnet werden kann. Im aSollStern-t-Diagramm 230 wurde an den Kurventangenten jeweils durch Steigungsdreiecke der Kurvengradient skizziert. So ist die Steigung der Steigungsdreiecke 232 betragsmäßig gleich der maximal möglichen Steigung, da im Beispielfall zum Zeitpunkt t=a die maximal vom ACC steuerbare Verzögerung oder sogar mehr angefordert wird. Die Verzögerungsanforderung zum Zeitpunkt a besteht nur sehr kurz, so daß die Kurve im aSollStern-t-Diagramm 230 die Auslöseschwelle 231 nicht erreicht. Damit wird auch kein Auslösesignal von Block 106 an das UND-Glied 107 abgegeben, weshalb die Aktivierung der Übernahmeaufforderung ausbleibt und die ÜNA-t-Kurve in 240 auf "0" bleibt.

Zwischen den beiden Zeitpunkten b und c bremst das vorausfahrende Fahrzeug leicht ab. Der Zeitpunkt b ist folglich der Startzeitpunkt dieses leichten Bremsmanövers sowie c der Endzeitpunkt dieses Bremsmanövers. Der Abstand dZO im Diagramm 210 nimmt währenddessen ab, bis das Bremsmanöver zum Zeitpunkt t=c abgeschlossen ist. Die Verzögerungswerte aWarn in Diagramm 220 sind zwischen t=b bis t=c betragsmäßig so klein, daß die Auslöseschwelle 221 nicht erreicht wird, das bedeutet folglich, daß die Bremsung so leicht ist, daß der Bremsdynamikbereich des ACC-Systems für eine entsprechende Verzögerung ausreicht. Im aSollStern-t-Diagramm 230 macht sich dieses bemerkbar, indem die Kurve flacher verläuft und die Tangente mit dem Steigungsdreieck 233 auch flacher ist als in der Situation zum Zeitpunkt t=a. Da das ACC-System im Fall t=b bis t=c eine ausreichende Verzögerung bereitstellen konnte wird auch im Falle dieser leichten Bremsung keine Übernahmeaufforderung aktiviert und so bleibt die Kurve im ÜNA-t-Diagramm 240 noch immer bei "0".

Im Folgenden beschleunigt das vorausfahrende Fahrzeug wieder, was sich durch die Vergrößerung des Abstandes dZO und das Verringern der Verzögerung bemerkbar macht.

Zum Zeitpunkt t=d bremst das vorausfahrende Fahrzeug wieder ab, diesmal jedoch sehr stark. Der Wert von aWarn schnellt sofort nach unten und überschreitet die Auslöseschwelle von aWarn 221. Der Wert von aSollStern fällt mit der maximal möglichen Steilheit 232 ab und erreicht zum Zeitpunkt t=e die Auslöseschwelle "aMaxVerzög + Offset2" 231.

Ab diesem Zeitpunkt t=e sind beide Auslösekriterien gleichzeitig erfüllt und es wird durch das UND- und das ODER-Glied 107 und 108 die Übernahmeaufforderung, wie in Fig.1 beschrieben, ausgelöst. Dies ist im ÜNA-t-Diagramm 240 dargestellt, indem die Kurve zum Zeitpunkt t=e von "0" nach "1" springt. Zu diesem Zeitpunkt e wird der Fahrer informiert, daß die Verzögerung des ACC-Systems nicht ausreicht um eine Kollision zu verhindern.

Zum Zeitpunkt t=f entschließt sich der Fahrer, das Bremspedal zu treten um eine größere Verzögerung zu erreichen, als sie durch das ACC-System bereitgestellt werden konnte. Gleichzeitig mit dem Bremseingriff des Fahrers zum Zeitpunkt t=f wird das ACC-System deaktiviert.

Die Auslöseschwellen 221 und 231 sind, wie bereits erwähnt, keine festen, sondern variable Schwellenwerte und können von Parametern wie beispielsweise der Geschwindigkeit abhängig gemacht werden. Die Kurven "aWarn (t)" 220 sowie "aSoll(t)" 230 wurden zum Zweck der besseren Verständlichkeit jeweils auf die Schwellen 221 und 231 normiert, so daß die Schwellen selbst als konstanter Wert, also als Waagerechte im Diagramm erscheinen.

Die Berechnung von aWarn berücksichtigt sowohl die Notwendigkeit, die vorhandene Relativgeschwindigkeit innerhalb des zur Verfügung stehenden Abstands dWarn abzubauen als auch die Absolutverzögerung des Zielobjekts, die zusätzlich aufgebracht werden muß, um eine Kollision zu vermeiden. Der Wert von dWarn läßt sich noch durch den Faktor fWarn modifizieren, um die Zeitlücke oder ein vom Fahrer vorgegebenes Fahrprogramm zu berücksichtigen.

Wird die Übernahmeaufforderung wie zum Zeitpunkt t=e ausgelöst, so kann diese entweder eine festgelegte, bestimmte Zeitdauer den Fahrer alarmieren oder aber so lange den Fahrer alarmieren, bis die Auslösekriterien nicht mehr erfüllt sind. Notwendigerweise muß die Aufforderung eine Mindestzeit aktiviert sein, da im Falle einer sehr kurzen Alarmierung diese für den Fahrer dennoch bemerkbar und eindeutig verständlich sein muß. Es ist auch zweckmäßig, daß zwischen zwei Übernahmeaufforderungen eine Mindestzeitdauer verstreichen muß um den Fahrer nicht durch ACC-Alarmierungen zu überlasten.

Neben deratigen Zeitbedingungen kann man die Übernahmeaufforderung jedoch auch in Abhängigkeit von Abstandsbedingungen verändern. So ist es beispielsweisezweckmäßig, daß eine einmal aktivierte Übernahmeaufforderung solange bestehen bleibt, bis ein Mindestabstand zum Zielobjekt wieder erreicht ist oder der Abstand zum Zielobjekt sich wieder vergrößert.

Im ÜNA-t-Diagramm der Fig.2 wurde die Deaktivierung der Übernahmeaufforderung in Form einer negativen Flanke von "1" nach "0" nicht dargestellt, da diese je nach Zeitdauer und Rücksetzbedingung einen anderen Verlauf aufweisen würde.

Durch Verwendung der beschriebenen Maßnahmen in einer der erwähnten Ausführungsarten ist es möglich, die Wahrscheinlichkeit einer Fehlaktivierung der ACC-Übernahmeaufforderung drastisch zu senken. Dadurch kann der Kraftfahrzeugfahrer der Übernahmeaufforderung mehr Vertrauen schenken als bisher, wodurch die Übernahmeaufforderung gleichzeitig bedeutungsvoller aufgenommen wird.

**Patentansprüche**

1. Verfahren zur Benachrichtigung des Fahrers eines Fahrzeugs mit adaptivem Fahrgeschwindigkeitsregler, um dem Fahrer die Aktivierung einer Übernahmeaufforderung (ÜNA, 109) mitzuteilen, die signalisiert, daß eine maximale, vom adaptiven Fahrgeschwindigkeitsregler steuerbare Bremskraft/druck aufgebracht wird und die daraus resultierende Verzögerung nicht ausreicht, um das geschwindigkeitsgeregelte Fahrzeug rechtzeitig und in ausreichendem Maße automatisch abzubremsen, wobei zur Aktivierung der Übernahmeaufforderung (ÜNA, 109) mindestens zwei Kriterien (aWarn, aSollStern) bezüglich Verzögerungswerten gleichzeitig erfüllt sind, wobei mindestens zwei dieser Kriterien Werte sind, die einer Verzögerung entsprechen, wobei einer dieser beiden Werte (aWarn) einen Verzögerungsbedarf zur Vermeidung einer Kollision repräsentiert, **dadurch gekennzeichnet, daß** ein weiterer Wert (aSollStern) dieser mindestens zwei Werte eine vom Fahrzeug an die Bremselemente ausgegebene Fahrzeugverzögerung repräsentiert, der hinsichtlich wenigstens einer der Größen zeitliche Verzögerungsänderung, maximale Verzögerungssteilheit und maximaler Absolutverzögerung begrenzt ist.

2. Verfahren nach Anspruch 1, **dadurch gekennzeichnet, daß** der Wert des/der maximal vom adaptiven Fahrgeschwindigkeitsregler steuerbaren Bremsdruckes/-kraft aMaxVerzög veränderbar ist, insbesondere in Abhängigkeit von der momentan gefahrenen Geschwindigkeit, in Abhängigkeit der Straßenverhältnisse und/oder in Abhängigkeit der Beladung des Fahrzeugs.

**3.** Verfahren nach einem der vorangegangenen Ansprüche, **dadurch gekennzeichnet, daß** das erfindungsgemäße Entscheidungssystem zur Aktivierung einer Übernahmeaufforderung (109) von mindestens einer weiteren Bedingung mittels einer UND-Verknüpfung (107) abhängig gemacht wird, wodurch jede zusätzliche Bedingung miterfüllt sein muß um eine Auslösung der Übernahmeaufforderung aktivieren zu können, wobei eine dieser weiteren Bedingungen zweckmäßigerweise ein Signal ist, das mitteilt, daß das ACC-System aktiv das Fahrzeug regelt.

**4.** Verfahren nach einem der vorangegangenen Ansprüche, **dadurch gekennzeichnet, daß** das erfindungsgemäße Entscheidungssystem zur Aktivierung einer Übernahmeaufforderung (109) von mindestens einer weiteren Bedingung mittels einer ODER-Verknüpfung (108) abhängig gemacht wird, wodurch jede zusätzliche Bedingung die Auslösung der Übernahmeaufforderung (109) einzeln veranlassen kann, wobei eine dieser weiteren Bedingungen zweckmäßigerweise ein Signal ist, das mitteilt, daß eine fehlerhafte Funktionsweise des ACC-Systems festgestellt wurde.

**5.** Verfahren nach einem der vorangegangenen Ansprüche, **dadurch gekennzeichnet, daß** bei aktivierter Übernahmeaufforderung die Warnung über eine Mindestzeit hinweg angesteuert wird und/oder zwischen zwei Warnungen eine Mindestzeit verstreichen muß und/oder die Warnung solange aufrechterhalten wird bis ein Mindestabstand zum vorausfahrenden Fahrzeug wieder erreicht wird und/oder bis sich der Abstand zum vorausfahrenden Fahrzeug wieder vergrößert und/oder bis der Fahrer durch Betätigung des Gas- oder Bremspedals oder des Ein/Aus-Schalters in das Fahrgeschehen eingreift.

**6.** Verfahren nach einem der vorangegangenen Ansprüche, **dadurch gekennzeichnet, daß** zur Bildung der Kriterien bezüglich Verzögerungswerten mindestens ein Faktor miteinbezogen wird, der fest vorgegeben oder variabel berechnet wird, der ein vom Fahrer gewähltes Fahrprogramm (komfortabel, sportlich, sicher, energiesparend) in das Fahrverhalten der ACC-Regelautomatik umsetzt.

**7.** Vorrichtung zur Benachrichtigung des Fahrers eines Fahrzeugs mit adaptivem Fahrgeschwindigkeitsregler, um dem Fahrer die Aktivierung einer Übernahmeaufforderung mitzuteilen, die signalisiert, daß ein maximaler, vom adaptiven Fahrgeschwindigkeitsregler steuerbarer Bremsdruck/-kraft aufgebracht wird und die daraus resultierende Verzögerung nicht ausreicht, um das geschwindigkeitsgeregelte Fahrzeug rechtzeitig und in ausreichendem Maße automatisch abzubremsen, vorzugsweise zur Durchführung eines der Verfahren nach einem der Ansprüche 1 bis 7, wobei zur Aktivierung der Übernahmeaufforderung (109) mindestens zwei Kriterien (aWarn, aSollStern) bezüglich Verzögerungswerten gleichzeitig erfüllt sind, wobei mindestens zwei dieser Kriterien Werte sind, die einer Verzögerung entsprechen, wobei einer dieser beiden Werte (aWarn) einen Verzögerungsbedarf zur Vermeidung einer Kollision repräsentiert, **dadurch gekennzeichnet, daß** ein weiterer Wert (aSollStern) dieser mindestens zwei Werte eine vom Fahrzeug an die Bremselemente ausgegebene Fahrzeugverzögerung repräsentiert, der hinsichtlich wenigstens einer der Größen zeitliche Verzögerungsänderung, maximale Verzögerungssteilheit und maximaler Absolutverzögerung begrenzt ist.

## Claims

**1.** Method for informing the driver of a vehicle with an adaptive cruise controller in order to inform the driver about the activation of a take-over request (ÜNA, 109) which signals that a maximum braking force/pressure which can be controlled by the adaptive cruise controller is applied and the resulting deceleration is not sufficient automatically to brake the velocity-regulated vehicle in good time and sufficiently, wherein, in order to activate the take-over request (ÜNA, 109), at least two criteria (aWarn, aSollStern) relating to deceleration values are fulfilled simultaneously, at least two of these criteria being values which correspond to a deceleration and one of these two values (aWarn) representing a deceleration request in order to avoid a collision, **characterized in that** a further value (aSollStern) of these at least two values represents a vehicle deceleration which is output to the brake elements by the vehicle and which is limited with respect to at least one of the variables comprising change in deceleration over time, maximum deceleration steepness and maximum absolute deceleration.

**2.** Method according to Claim 1, **characterized in that** the value of the braking pressure/force aMaxVerzög which can be controlled at maximum by the adaptive cruise controller can be changed, in particular as a function of the velocity at which the vehicle is travelling at a given time, as a function of the road conditions and/or as a function of the load of the vehicle.

3. Method according to one of the preceding claims, **characterized in that** the decision system according to the invention for activating a take-over request (109) is made dependent on at least one further condition by means of an AND logic operation (107), as a result of which each additional condition also has to be fulfilled in order to be able to activate triggering of the take-over request, one of these conditions being expediently a signal which indicates whether the ACC system is actively controlling the vehicle.

4. Method according to one of the preceding claims, **characterized in that** the decision system according to the invention for activating a take-over request (109) is made dependent on at least one further condition by means of an OR logic operation (108), as a result of which each additional condition can individually bring about the triggering of the take-over request (109), one of these further conditions being expediently a signal which indicates that a faulty method of operation of the ACC system has been detected.

5. Method according to one of the preceding claims, **characterized in that**, when a take-over request is activated, the warning is actuated over a minimum period of time and/or a minimum period of time must pass between two warnings and/or the warning is maintained until a minimum distance from the vehicle travelling in front is attained again and/or until the distance from the vehicle travelling in front increases again and/or until the driver engages in the events on the road by activating the accelerator pedal or brake pedal or the on/off switch.

6. Method according to one of the preceding claims, **characterized in that**, in order to form the criteria relating to deceleration values, at least one factor is also used, which is permanently predefined or calculated on a variable basis and which converts a driving program (comfortable, sporty, safe, energy-saving) which is selected by the driver into the driving behaviour of the ACC automatic control system.

7. Device for informing the driver of a vehicle with an adaptive cruise controller in order to inform the driver about the activation of a take-over request which signals that a maximum braking pressure/force which can be controlled by the adaptive cruise controller is applied and the resulting deceleration is not sufficient automatically to brake the velocity-regulated vehicle in good time and sufficiently, preferably for carrying out one of the methods according to one of Claims 1 to 7, wherein, in order to activate the take-over request (109), at least two criteria (aWarn, aSollStern) relating to deceleration values are fulfilled simultaneously, at least two of these criteria being values which correspond to a deceleration and one of these two values (aWarn) representing a deceleration request in order to avoid a collision, **characterized in that** a further value (aSollStern) of these at least two values represents a vehicle deceleration which is output to the brake elements by the vehicle and which is limited with respect to at least one of the variables comprising change in deceleration over time, maximum deceleration steepness and maximum absolute deceleration.

**Revendications**

1. Procédé destiné à avertir le conducteur d'un véhicule comprenant un régulateur de vitesse adaptatif pour notifier au conducteur l'activation d'une demande de prise en charge (ÜNA, 109) qui signale qu'une force/pression maximale de freinage pouvant être commandée par le régulateur de vitesse adaptatif est exercée et que la décélération résultante ne suffit pas à freiner automatiquement le véhicule doté du régulateur de vitesse en temps utile et en quantité suffisante, au moins deux critères (aWarn, aSollStern) étant remplis simultanément par rapport aux valeurs de décélération pour activer la demande de prise en charge (ÜNA, 109), au moins deux de ces critères étant des valeurs qui correspondent à une décélération, l'une de ces deux valeurs (aWarn) représentant une condition de décélération pour éviter une collision,
**caractérisé en ce que**
une autre valeur (aSollStern) de ces au moins deux valeurs représente une décélération du véhicule produite par le véhicule sur les éléments de freinage, décélération qui est limitée par rapport à au moins une des grandeurs par une modification de décélération dans le temps, une partie de décélération maximale et une décélération absolue maximale.

2. Procédé selon la revendication 1,
**caractérisé en ce que**
la valeur de la force/pression maximale de freinage aMaxVerzög pouvant être commandée par le régulateur de vitesse adaptatif peut être modifiée, notamment en fonction de la vitesse de conduite du moment précis, en fonction des rapports sur la voie et/ou en fonction de la charge du véhicule.

**3.** Procédé selon l'une des revendications précédentes, **caractérisé en ce que** le système de décision selon l'invention destiné à activer une demande de prise en charge (109) est rendu dépendant d'au moins une autre condition au moyen d'une liaison ET (107), chaque condition supplémentaire devant être remplie pour pouvoir activer un déclenchement de la demande de prise en charge, l'une de ces autres conditions étant de manière appropriée un signal qui notifie que le système ACC régule le véhicule de manière active.

**4.** Procédé selon l'une des revendications précédentes, **caractérisé en ce que** le système de décision selon l'invention destiné à activer une demande de prise en charge (109) est rendu dépendant d'au moins une autre condition au moyen d'une liaison OU (108), chaque condition supplémentaire pouvant déterminer individuellement le déclenchement de la demande de prise en charge (109), l'une de ces autres conditions étant de manière appropriée un signal qui notifie qu'un fonctionnement déficient du système ACC a été constaté.

**5.** Procédé selon l'une des revendications précédentes, **caractérisé en ce que**, dans le cas où la demande de prise en charge est activée, l'avertissement est généré pour un temps minimal et/ou un temps minimal doit s'écouler entre deux avertissements et/ou l'avertissement est maintenu jusqu'à ce qu'une distance minimale par rapport au véhicule précédent est de nouveau atteinte et/ou jusqu'à ce que la distance par rapport au véhicule précédent a été réaugmentée et/ou jusqu'à ce que le conducteur intervienne dans la conduite en actionnant la pédale d'accélération ou de freinage ou le contacteur/interrupteur.

**6.** Procédé selon l'une des revendications précédentes, **caractérisé en ce que**, pour former les critères relatifs aux valeurs de décélération, au moins un facteur est intégré et prédéterminé ou calculé de manière modulable, pour convertir un programme de conduite choisi par le conducteur (confortable, sportif, de sécurité, économique) dans le comportement de déplacement du système automatique de régulation ACC.

**7.** Dispositif destiné à avertir le conducteur d'un véhicule comprenant un régulateur de vitesse adaptatif pour notifier au conducteur l'activation d'une demande de prise en charge qui signale qu'une force/pression maximale de freinage pouvant être commandée par le régulateur de vitesse adaptatif est exercée et que la décélération résultante ne suffit pas à freiner automatiquement le véhicule doté du régulateur de vitesse en temps utile et en quantité suffisante, de préférence pour réaliser un des procédés selon l'une des revendications 1 à 7, dans lequel, pour activer la demande de prise en charge (109) au moins deux critères (aWarn, aSollStern) sont remplis simultanément par rapport aux valeurs de décélération, au moins deux de ces critères étant des valeurs qui correspondent à une décélération, l'une de ces deux valeurs (aWarn) représentant une condition de décélération pour éviter une collision, **caractérisé en ce que** une autre valeur (aSollStern) de ces au moins deux valeurs représente une décélération du véhicule produite par le véhicule sur les éléments de freinage, décélération qui est limitée par rapport à au moins une des grandeurs par une modification de décélération dans le temps, une partie de décélération maximale et une décélération absolue maximale.

# FIG. 1

dZ0    vRelZ0    aZ0

101    f Warn

aWarn

105

107

108

109

&

≥1

aMaxVerzög

dZ0    vRelZ0    aZ0

102    f Warn

aSoll

103

→ EGAS-System

aSollStern

ja

106

ja

104

vakt    Str.zustand

110    111

EP 1 185 432 B1

# FIG. 2